# EUROPEAN PATENT SPECIFICATION

(11) **EP 3 153 428 B1**
(45) Date of publication and mention of the grant of the patent: **11.08.2021**
(21) Application number: 16177116.7
(22) Date of filing: 30.06.2016
(51) Int. Cl.: B65D 81/32, A47J 43/27, B01F 11/00, B01F 13/00, B01F 15/00, B01F 15/02

(54) **CONTAINER WITH MIXING BLADE AND METHOD**
BEHÄLTER MIT MISCHFLÜGEL UND VERFAHREN
RÉCIPIENT AVEC LAME DE MÉLANGE ET PROCÉDÉ

(30) Priority: 05.10.2015 US 201514874853
(43) Date of publication of application: 12.04.2017
(73) Proprietor: DryBev International, Inc, Dallas, TX 75244 (US)
(72) Inventor: Casey, Theodore, Dallas, TX Texas 75248 (US)
(74) Representative: Barker Brettell LLP

(56) References cited:
- GB-A- 1 201 539
- JP-A- 2003 081 357
- US-A- 6 059 443
- US-A1- 2012 103 841
- US-B1- 8 960 424
- None

## Description

### CROSS-REFERENCE TO RELATED APPLICATIONS

This application is a continuation-in-part of, and claims priority to, U.S. Non-Provisional Patent Application No. 14/593,748 entitled "CONTAINER WITH MIXING BLADE" filed on January 9, 2015; U.S. Non-Provisional Patent Application No. 14/593,763 entitled "CONTAINER WITH MIXING BLADE" filed on January 9, 2015; U.S. Non-Provisional Patent Application No. 14/593,771 entitled "CONTAINER WITH MIXING BLADE" filed on January 9, 2015; and U.S. Non-Provisional Patent Application No. 14/593,788 entitled "CONTAINER WITH MIXING BLADE" filed on January 9, 2015.

### TECHNICAL FIELD

Disclosed herein is a method and system for separately storing and mixing two or more substances.

### DESCRIPTION OF RELATED ART

There exist prior art systems for separately storing and mixing two or more substances. Examples include the systems described in U.S. Patent Nos. 6,059,443, 7,861,855 B2, 8,720,680 B2, and European Patent No. EP 2190751B1.

US 6, 059, 443 discloses a container system according to the preamble of claim 1 and a method according to the preamble of claim 13.

GB 1,201,539 (A) discloses a device for the storage, mixing and dispensing of ingredients which comprises an inner container and an outer container, the former being releasably supported within the latter so that their mouths are approximately coplanar, a rupturable closure across and in sealing engagement with both mouths, and means engageable with the device for rupturing the closure to open both mouths and for permitting the release of the inner container so that it can move within the outer container when the device is shaken to mix their contents. In a preferred embodiment, four coplanar nibs project outwardly from equally spaced locations at the top of the inner container and rest on four lands extending inwardly from equally spaced locations on the inside of the neck of the outer container. The latter disposition on coupling the containers is ensured by means of an indexing lug which fits through one of the spaces between the lands. A flat membrane of metal foil is adhesively secured over and seals the mouths of both containers. A delivery screw cap with a spout is rotatably mountable on external threads on the neck of the outer container and carries the rupturing means comprising two deep cutters and two short cutters projecting downwardly from the base of the cap. As the cap is screwed on the neck the deep cutters operate upon the portion of the metal foil within the inner container, and the, short cutters act on the portion of the foil between the mouths of the containers and then impinge upon the nibs of the inner container so as to rotate it into a position wherein it is free to fall into the outer container. The containers may be formed from plastics material or metal, it being necessary to coat the latter with resin if corrosive liquids are packed. The outer container is preferably squeezable and made of thin aluminium if a metal is to be used.

Disclosed herein is an improved method and system for separately storing and mixing two or more substances.

### SUMMARY OF THE DISCLOSURE

In one aspect, what is disclosed herein is a container system. The container system includes a mixing container having a main container that stores one or more first substances. The main container has a first upper opening. The container system also includes a storage repository coupled to main container, and which stores one or more second substances. The storage repository includes a lip defining a second upper opening, which has an outside diameter smaller than the diameter of the first upper opening. Additionally, the container system includes a mixing blade having an outside diameter smaller than the diameter of the first upper opening and an inside diameter smaller than the outside diameter of the storage repository's lip. The mixing blade also has a plurality of openings. Furthermore, the container system includes a releasable liner placed over the storage repository's lip, and the storage repository's lip forms a seal with a lower surface of the releasable liner.

In another aspect, presently disclosed is a method of separately storing one or more first substances and one or more second substances, and mixing the substances at the time of usage of a product comprising a mixture of the substances. The method involves agitating the container system after removal of the releasable liner so that the one or more first substances and one or more second substances are permitted to mix with another.

### BRIEF DESCRIPTION OF THE DRAWINGS

The disclosure will be better understood and its numerous objects and advantages will become more apparent to those skilled in the art by reference to the following drawings, in conjunction with the accompanying specification, in which:
FIG. 1 is an exploded perspective view of a preferred embodiment of the container system of the present disclosure;
FIG. 1A is an exploded perspective view of an alternative embodiment of the container system of the present disclosure;
FIG. 2 is a perspective view of a preferred embodiment of the container system of the present disclosure with the storage repository covered by a releasable liner;
FIG. 3 is a perspective view of a preferred embodiment of the container system of the present disclosure showing the releasable liner being released;
FIG. 4 is a view of the container system showing the container system being agitated so that the one or more first substances and one or more second substances are mixed;
FIG. 5 is an exploded, front elevational, cross-sectional view of a preferred embodiment of the container system of the present disclosure;
FIG. 6 is a front elevational, cross-sectional view of a preferred embodiment of the container system of the present disclosure with the releasable liner placed over the storage repository;
FIG. 7 is a front elevational, cross-sectional view of a preferred embodiment of the container system of the present disclosure with the releasable liner removed;
FIG. 8A is a top, or overhead, view of the storage repository of a preferred embodiment of the container system of the present disclosure;
FIG. 8B is a perspective view of the storage repository of a preferred embodiment of the container system of the present disclosure;
FIG. 9 is an exploded, front elevational, cross-sectional view of an alternative preferred embodiment of the container system of the present disclosure;
FIG. 10 is a front elevational, cross-sectional view of the alternative preferred embodiment of the container system of the present disclosure with the releasable liner placed over the storage repository;
FIG. 11 is a front elevational, cross-sectional view of the alternative preferred embodiment of the container system of the present disclosure with the releasable liner removed; and
FIG. 12 is a side, cross-sectional, perspective view of an alternative mixing blade coupled to the cap of the alternative preferred embodiment of the container system of the present disclosure.

### DETAILED DESCRIPTION OF EMBODIMENTS

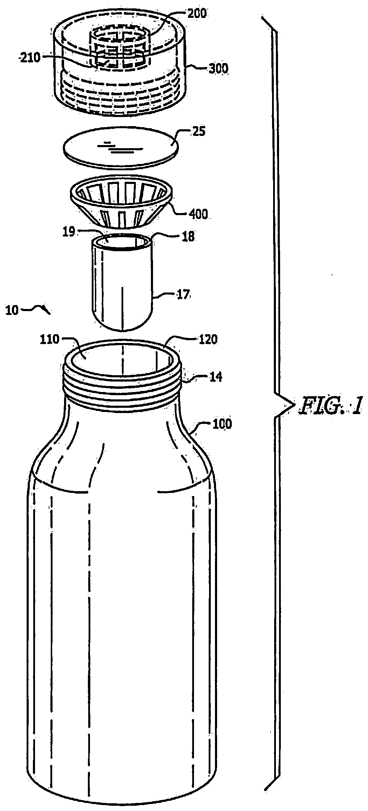

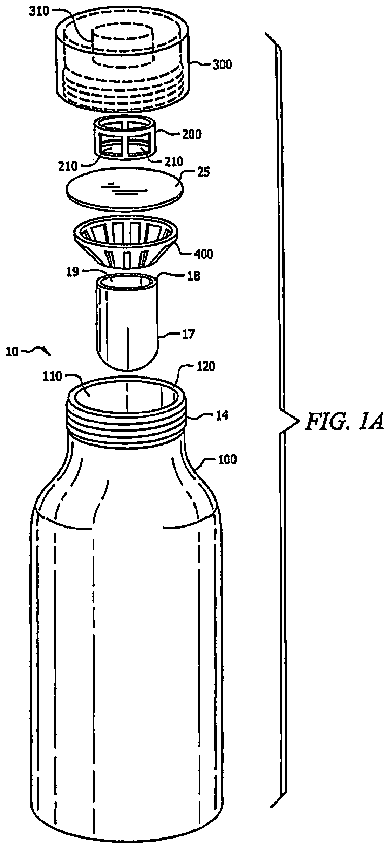

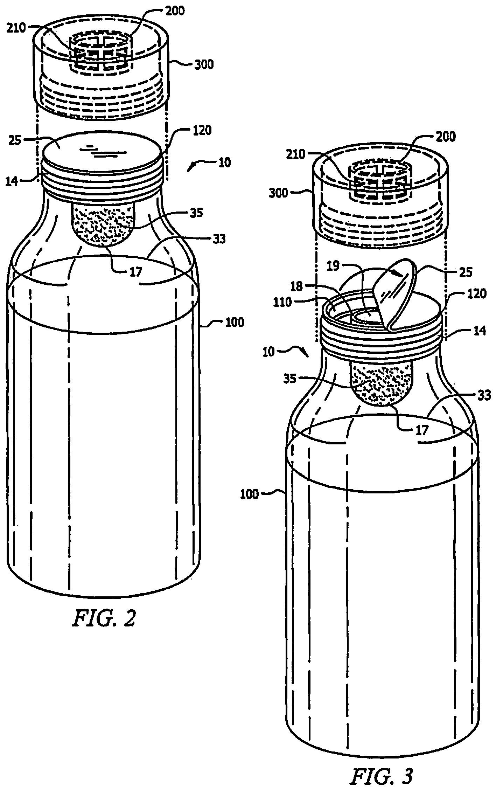

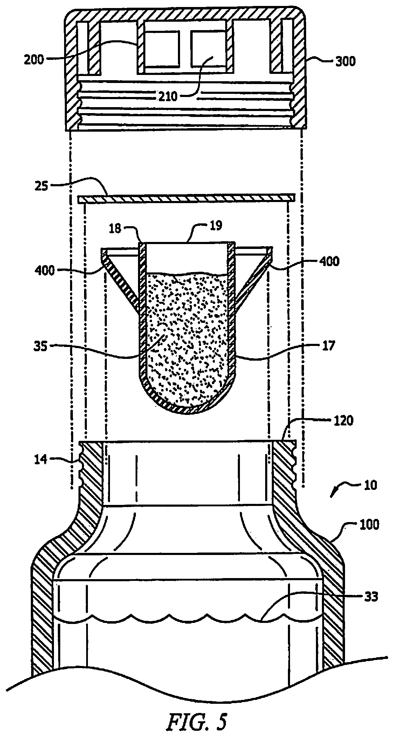

Referring to Figures 1-7, a preferred storage and mixing container 10 comprises a bottle 100 for containing one or more first substances, such as a liquid 33, a storage repository 17 for containing one or more second substances, such as a powder 35. The storage repository 17 is disposed within an upper opening 110 of the bottle 100 and coupled to the neck 120 of the bottle 100. This preferred embodiment includes a releasable liner 25 to cover a second upper opening 19 of the storage repository 17 when the container 10 is used to separately store the powder 35 from the liquid 33, and a cap 300 including a mixing blade 200 that couples to the bottle 100, such as by threads 14.

As depicted in Figures 1-3 and Figures 5-6, the cap 300 may comprise an element 200, sometimes referred to as a mixing blade, which is generally centrally located within the interior of the cap 300. As shown, the element 200 may be generally ring-shaped and have substantially the same diameter as the lip 18 defining an upper opening to the storage repository 17. Further, the element 200 may comprise ports 210 through the walls thereof. One of ordinary skill in the art will appreciate element 200 can be implemented in shapes other than circular shapes, such as a square, rectangle, pentagon, and the like; if non-circular shapes are used for element 200, lip 18 should be formed so that it generally matches the non-circular shape of and has the same perimeter as element 200.

In various implementations, the element 200 may be formed integrally within the cap 300, as shown in Figure 1, or the element 200 may be formed separately from the cap 300 and secured within a ring 310 disposed in cap 300, as shown in Figure 1A. In the implementation of Figure 1A, the element 200 may be secured within the ring 310 via interference fit and/or otherwise coupled to the cap 300 adhesively, mechanically, magnetically or by other means that will be apparent to one of ordinary skill in the art.

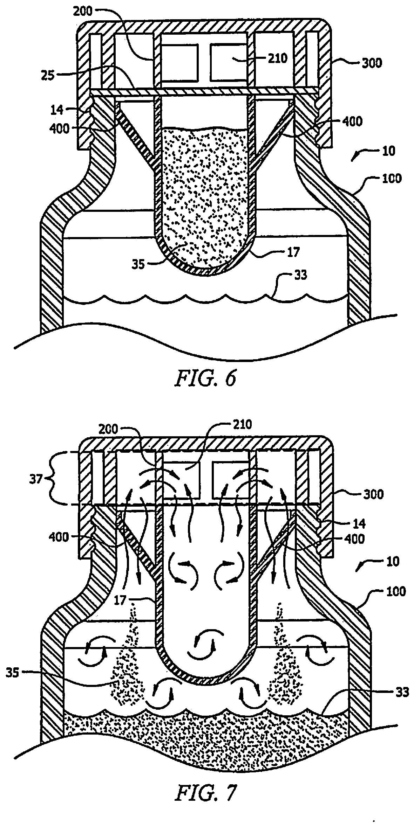

As depicted in Figures 1 and 1A, the container system includes one or more couplings 400 used so that the storage repository 17 will be disposed within an upper opening of the bottle 100 and coupled to the neck 120 of the bottle 100. Disposition of the storage repository 17 within the bottle 100 is depicted in Figures 6 and 7.

As depicted in Figure 6, when the cap 300 is coupled to the bottle 100 while the releasable liner 25 is present, and the mixing blade 200 is contacting an upper surface of the releasable liner 25, a seal is formed between a lower surface of the releasable liner 25 and the lip 18 of the storage repository 17. The seal prevents the one or more first substances 33 from mixing with the one or more second substances 35. As shown in Figure 6, the cap 300 is coupled to the bottle 100 using threads, but one of ordinary skill in the art will appreciate any number of other means can be used to couple cap 300 to bottle 100.

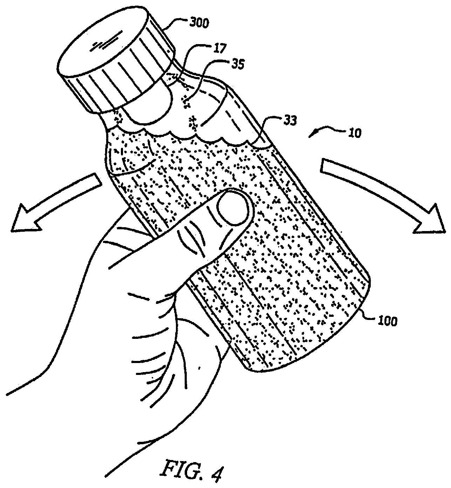

Figure 7 depicts the container system when the releasable liner 25 has been removed. A gap 37 is provided, comprising space above the one or more couplings, continuing above the upper opening 110 of the bottle 100, and below an interior surface of the top of the cap 300, through ports 210, and into additional open space inside mixing blade 200. The gap 37 provides additional space to facilitate mixing of liquid 33 and powder 35. When releasable liner 25 has been removed, liquid 33 may move between the bottle 100, gap 37, and storage repository 17 by passing around the one or more couplings 400 and through the one or more ports 210 of the mixing blade 200. Likewise, when releasable liner 25 has been removed, powder 35, may move between the storage repository 17, gap 37, and the bottle 100 by passing through ports 210 of the mixing blade 200 and the one or more couplings 400. Such mixing is depicted in Figure 7, and occurs when, for example, the bottle 100 is shaken, inverted, or otherwise agitated, one example of such agitation being depicted in Figure 4.

In a preferred embodiment, as depicted in Figures 6 and 7, mixing blade 200 may have substantially the same height as the height of the space created between the upper opening 110 of the bottle 100 and the interior surface of the top of the cap 300, and the diameter of the mixing blade may have substantially the same diameter as the diameter of the lip 18 of the storage repository 17. One of ordinary skill in the art will appreciate that mixing blade 200 can be designed with ports 210 having virtually any shape, including polygonal shapes such as rectangles, squares, and triangles, or curved shapes, such as circles. Also, the number of ports 210 that may be used is not limited to the number depicted in Figures 1-3.

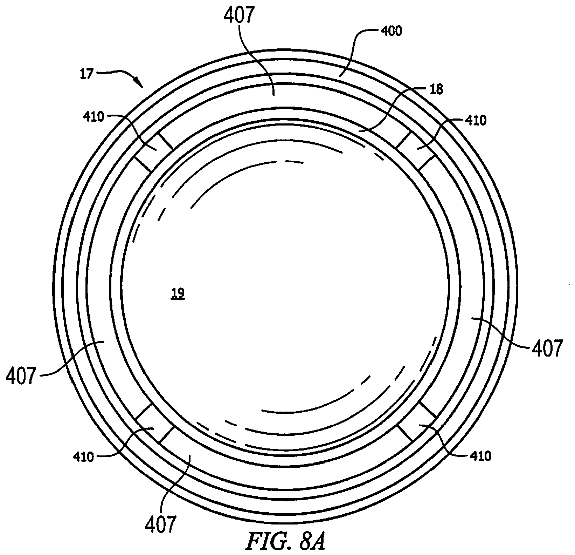

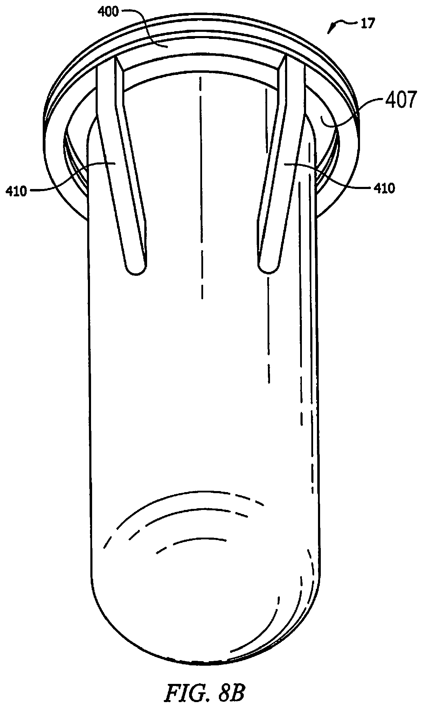

While the one or more couplings 400 may not be designed so that the one or more first substances and one or more second substances are completely prevented from moving between the bottle 100 and storage repository 17, one of ordinary skill in the art will appreciate that various couplings may be used to couple the storage repository 17 to the neck 110 of bottle 100. Couplings 400 may consist of a single piece of material having ports through which the one or more first and second substances may move, or, as depicted in Figures 8A and 8B, multiple pieces of material, such as support arms 410, that are placed apart from one another to create space 407 through which the one or more first and second substances may move. Also, couplings 400 may be manufactured as one piece with the storage repository 17 or bottle 100, or may be separate components.

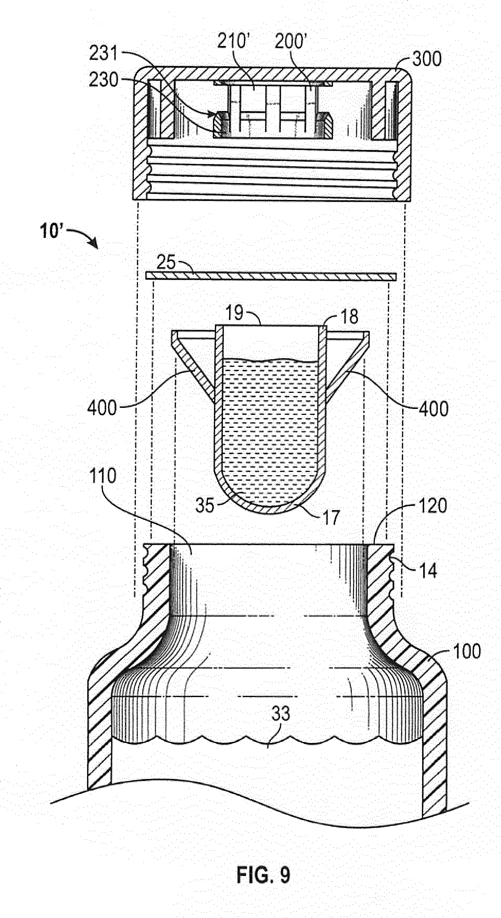

Referring to Figures 9-11, wherein like reference numerals correspond to like components, another alternative preferred storage and mixing container 10' is depicted comprising an alternative element 200', sometimes referred to as an alternative mixing blade. The alternative element 200' comprises one or more ports 210' extending through the walls thereof. The alternative element 200' further comprises a lower portion 230 that extends into a non-vertical wall portion 231 formed adjacent to the ports 210' and providing a lower boundary to the ports 210'. As used herein, the term non-vertical means not perpendicular to the plane defined by upper opening 110 of the bottle 100. One of ordinary skill in the art will appreciate that a non-vertical wall portion can be formed into a variety of linear or curved shapes, or a combination of different shapes.

The alternative element 200' may be generally centrally located within the interior of the cap 300 of the alternative container 10'. Similar to element 200 shown in Figures 1-7, the alternative element 200' may be generally ring-shaped and have substantially the same diameter as the lip 18 defining an upper opening to the storage repository 17. One of ordinary skill in the art will appreciate that the alternative element 200' can be implemented in shapes other than circular shapes, such as a square, rectangle, pentagon, and the like; if non-circular shapes are used for alternative element 200', then lip 18 of the alternative container 10' should be formed so that it generally matches the non-circular shape of and has the same perimeter as alternative element 200'.

In various implementations, the alternative element 200' may be formed integrally within the cap 300, as shown in Figure 1, or the alternative element 200' may be formed separately from the cap 300 and secured within a ring 310 disposed in the cap 300, as shown in Figure 1A. The alternative element 200' may be secured within the ring 310 via interference fit and/or otherwise coupled to the cap 300 adhesively, mechanically, magnetically or by other means that will be apparent to one of ordinary skill in the art.

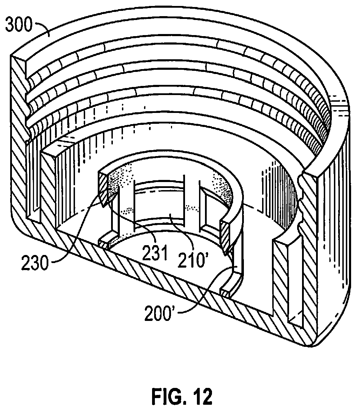

Figure 12 depicts a side, cross-sectional, perspective view of the cap 300 with the alternative element 200' coupled thereto. As depicted in Figure 9-12, each of the substantially vertical wall portion 230 and the non-vertical wall portion 231 of the alternative element 200' comprises opposing sides. The opposing sides of the substantially vertical wall portion 230 may be substantially parallel to each other and substantially perpendicular to the lip 18 of the alternative container 10'. At least one of the opposing sides of the non-vertical wall portion 231 may be tapered so as to extend at an angle from the corresponding side of the substantially vertical wall portion 230 toward the other opposing side of the non-vertical wall portion 231. If both opposing sides of the non-vertical wall portion 231 are tapered, they may extend toward each other at substantially the same angle or at different angles from the corresponding side of the substantially vertical wall portion 230. As shown, the opposing sides of the non-vertical wall portion 231 may terminate substantially at a point adjacent to the ports 210'.

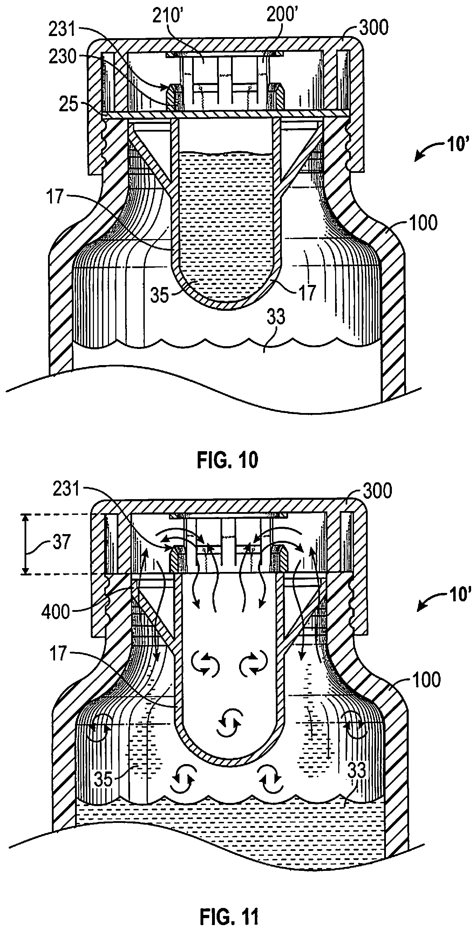

As depicted in Figure 10, when the cap 300 is coupled to the bottle 100 while the releasable liner 25 is present, and the mixing blade 200' is contacting an upper surface of the releasable liner 25, a seal is formed between a lower surface of the releasable liner 25 and the lip 18 of the storage repository 17. The seal prevents the one or more first substances 33 from mixing with the one or more second substances 35.

Figure 11 depicts the container system when the releasable liner 25 has been removed. A gap 37 is provided, comprising space above the one or more couplings, continuing above the upper opening 110 of the bottle 100, and below an interior surface of the top of the cap 300, through ports 210', and into additional open space inside alternative mixing blade 200'. The gap 37 provides additional space to facilitate mixing of liquid 33 and powder 35. When releasable liner 25 has been removed, liquid 33 may move between the bottle 100, gap 37, and storage repository 17 by passing around the one or more couplings 400 and through ports 210' of the alternative mixing blade 200'. Likewise, when releasable liner 25 has been removed, powder 35 may move between the storage repository 17, gap 37, and the bottle 100 by passing through ports 210' of the alternative mixing blade 200' and the one or more couplings 400.

As shown in Figure 11, such mixing occurs when, for example, the bottle 100 is shaken, inverted, or otherwise agitated, one example of such agitation being depicted in Figure 4. During such mixing, the non-vertical surface 231 of the alternative mixing blade 200' may inhibit or prevent the build-up of powder 35, or any other second substance, on the alternative mixing blade 200' and may further enhance mixing as powder 35 moves from the storage repository 17 and through the ports 210' of the alternative mixing blade 200'.

As depicted in Figures 9-11, the alternative mixing blade 200' may have substantially the same height as the height of the space created between the upper opening 110 of the bottle 100 and the interior surface of the top of the cap 300, and the diameter of the alternative mixing blade 200' may have substantially the same diameter as the diameter of the lip 18 of the storage repository 17. One of ordinary skill in the art will appreciate that the alternative mixing blade 200' can be designed with ports 210' having virtually any shape, including polygonal shapes such as rectangles, squares, and triangles, or curved shapes, such as circles. Also, the number of ports 210' that may be used is not limited to the number depicted in Figures 1-12.

The one or more first substances and the one or more second substances may each be in solid form, liquid form, or some combination thereof. Examples of substances that may be used in connection with the container system include but are not limited to the following substances: water, dehydrated substances, preservative free substances, dietary supplement mixtures, nutritional mixtures, protein mixtures, dairy based proteins, milk proteins, whey proteins, vegetable based proteins, soy based proteins, amino-acids, beta alanine, vitamins, minerals, creatine, glutamine, L-arginine, phenylalanine, L-Leucine, L-Isoleucine, L-yaline, synephrine, yohimbe, ginseng, ascorbic acid, hydroxyl citric acid, aloe vera, dimethylamyamine, polysaccharide, monosaccharide, maltodextrin, dextrose, fructose, silicon, artificial sweeteners, natural sweeteners, sucralose, artificial or natural flavors, artificial or natural colors, tea, coffee, dairy product, or any other substances which may be consumed by a user either alone, or in combination with any other chemical or other substance.

The bottle 100 and storage repository 17 may be constructed of any material suitable for storing liquid or solid substances. In a preferred embodiment, the bottle 100 is manufactured of polyethylene terephthalate (PET). One of ordinary skill in the art will appreciate that other materials also could be used to manufacture said bottle 100 or storage repository 17, such as other plastics (including High Density Polyethylene and polypropylene), glass, metal, styrofoam and the like. It is contemplated that alternate embodiments of the container system may be constructed of materials suitable for heating within a microwave oven or other heating apparatus. Cap 300, mixing blade 200, alternative mixing blade 200', and the one or more couplings 400 may likewise be constructed of any suitable materials, including those identified above.

The purpose of releasable liner 25 is to prevent the mixing of the one or more first substances and the one or more second substances. One of ordinary skill in the art will therefore appreciate releasable liner 25 can be implemented in the container system of the present disclosure in many different ways. Releasable liner 25 may cover first upper opening 110 of the bottle 100 and the second upper opening 19 of storage repository 17, but one of ordinary skill in the art will appreciate releasable liner 25 need only cover second upper opening 19. Releasable liner 25 may be a gasket, i.e., it may be loosely placed over second upper opening 19 in the absence of cap 300 being placed on bottle 100, so that the releasable liner 25 might fall off when cap 300 is removed. Or, releasable liner 25 might be coupled to bottle 100 and/or lip 18 using an adhesive. Releasable liner 25 could even be formed in the shape of a sphere, such as a marble, or a spherical cone, and be disposed in second upper opening 19 of storage repository 17.

It is believed the operation and construction of the apparatus and method disclosed herein will be apparent from the foregoing description.

## Claims

1. A container system (10, 10') for mixing two or more substances comprising:
(a) a main container (100) for holding one or more first substances (33), said main container (100) having a first upper opening (110);
(b) a storage repository (17) for holding one or more second substances (35), said storage repository (17) positioned within and coupled to said main container (100), and including a lip (18) defining a second upper opening (19), said lip (18) having an outside diameter smaller than the diameter of the first upper opening (110);
(c) a mixing blade (200, 200'), said mixing blade (200, 200') having an outside diameter smaller than the diameter of the first upper opening (110) and an inside diameter smaller than the outside diameter of said lip (18), said mixing blade (200, 200') having a plurality of openings (210,210'); and
(d) a releasable liner (25) covering said second upper opening (19);
(e) wherein said lip (18) forms a seal with a lower surface of said releasable liner (25),
**characterized in that**
at least a portion of said mixing blade (200, 200') contacts an upper surface of said releasable liner (25).

2. The container system (10, 10') according to claim 1, wherein at least one of the following occurs:
at least a portion of said mixing blade (200, 200') contacts said lip (18) after said releasable liner (25) is removed;
no portion of said mixing blade (200, 200') contacts said lip (18) after said releasable liner (25) is removed; and
said plurality of openings (210, 210') in said mixing blade (200, 200') aid in mixing said second substances (35) with said first substances (33) when said releasable liner (25) is removed to open said storage repository (17) and said container system (10, 10') is shaken.

3. The container system (10, 10') according to either of claim 1 or claim 2, wherein said first upper opening (110) is formed in a neck (120) of said main container (100).

4. The container system (10, 10') according to claim 3, wherein at least one of the following occurs:
the container system (10, 10') further comprises a releasable cap (300) coupled to an outer surface (14) of said neck (120) and having an upper inner surface covering said first upper opening (110), wherein said mixing blade (200, 200') is coupled to said upper inner surface of said releasable cap (300); and
the container system (10, 10') further comprises a releasable cap (300) coupled to an outer surface (14) of said neck (120) and having an upper inner surface covering said first upper opening (110), wherein said mixing blade (200, 200') is integrally formed into said upper inner surface of said releasable cap (300).

5. The container system (10, 10') according to claim 4, wherein at least one of the following occurs:
said releasable liner (25) falls off to open said storage repository (17) when said releasable cap (300) is removed; and
said releasable liner (25) is selectively releasable to open said storage repository (17) when said releasable cap (300) is removed.

6. The container system (10, 10') according to any of the preceding claims, wherein said storage repository (17) is coupled to said main container (100) by one or more couplings (400, 410).

7. The container system (10, 10') according to claim 6, wherein at least one of the following occurs:
said one or more couplings (400, 410) comprise a single component (400) surrounding said storage repository (17), said single component (400) having ports therethrough;
said one or more couplings (400, 410) comprise a plurality of support arms (410) spaced apart around said storage repository (17); and
said one or more couplings (400, 410) form openings (407) that aid in mixing said second substances (35) with said first substances (33) when said releasable liner (25) is removed to open said storage repository (17) and said container system (10, 10') is shaken.

8. The container system (10, 10') according to any of the preceding claims, wherein at least one of the following occurs:
said releasable liner (25) is a gasket placed loosely over second upper opening (19) and engaging said lip (18);
said releasable liner (25) is sealed to said lip (18) with an adhesive; and
said releasable liner (25) is spherical or conical and is disposed in said second upper opening (19).

9. The container system (10') according to any of the preceding claims, wherein said mixing blade (200') further comprises a non-vertical wall portion (231) adjacent said plurality of openings (210').

10. The container system (10') according to claim 9, wherein said non-vertical wall portion (231) has at least one tapered side extending at an angle from a corresponding side of a substantially vertical wall portion (230) of the mixing blade (200').

11. The container system (10') according to claim 9 or claim 10, wherein said non-vertical wall portion (231) has two tapered sides, each of the two tapered sides extending toward each other at an angle from two corresponding sides of a substantially vertical wall portion (230) of the mixing blade (200').

12. The container system (10') according to claim 11, wherein at least one of the following occurs:
said two tapered sides extend toward each other at substantially the same angle from said two corresponding sides of the substantially vertical wall portion (230) of the mixing blade (200');
said two tapered sides extend toward each other at different angles from said two corresponding sides of the substantially vertical wall portion (230) of the mixing blade (200'); and
said two tapered sides terminate substantially at a point adjacent said plurality of openings (210').

13. A method for separately storing and mixing two or more substances in a container system (10, 10'), the method comprising:
(a) holding one or more first substances (33) in a main container (100);
(b) holding one or more second substances (35) in a storage repository (17) coupled within said main container (100);
(c) closing said storage repository (17) with a liner (25) to prevent said second substances (35) from mixing with said first substances (33);
(d) engaging said liner (35) with a mixing blade (200, 200'); and
(e) when mixing of said first substances (33) with said second substances (35) is desired;
disengaging said mixing blade (200, 200') from said liner (25);
releasing said liner (25) to open said storage repository (17);
closing said main container (100) with a cap (300); and
shaking said container system (10, 10') to cause mixing of said first substances (33) with said second substances (35), wherein said mixing blade (200, 200') aids in said mixing step,
**characterized in that**
the cap (300) is coupled to said mixing blade (200, 200').

14. The method of claim 13, wherein said one or more first substances are selected from the group comprising: water, dehydrated substances, preservative free substances, dietary supplement mixtures, nutritional mixtures, protein mixtures, dairy based proteins, milk proteins, whey proteins, vegetable based proteins, soy based proteins, amino-acids, beta alanine, vitamins, minerals, creatine, glutamine, L-arginine, phenylalanine, L-Leucine, L-Isoleucine, L-yaline, synephrine, yohimbe, ginseng, ascorbic acid, hydroxyl citric acid, aloe vera, dimethylamyamine, polysaccharide, monosaccharide, maltodextrin, dextrose, fructose, silicon, artificial sweeteners, natural sweeteners, sucralose, artificial or natural flavors, artificial or natural colors, tea, coffee, dairy products, or any combination thereof.

15. The method of claim 13, wherein said one or more second substances are selected from the group comprising: water, dehydrated substances, preservative free substances, dietary supplement mixtures, nutritional mixtures, protein mixtures, dairy based proteins, milk proteins, whey proteins, vegetable based proteins, soy based proteins, amino-acids, beta alanine, vitamins, minerals, creatine, glutamine, L-arginine, phenylalanine, L-Leucine, L-Isoleucine, L-yaline, synephrine, yohimbe, ginseng, ascorbic acid, hydroxyl citric acid, aloe vera, dimethylamyamine, polysaccharide, monosaccharide, maltodextrin, dextrose, fructose, silicon, artificial sweeteners, natural sweeteners, sucralose, artificial or natural flavors, artificial or natural colors, tea, coffee, dairy products, or any combination thereof.

## Patentansprüche

1. Behältersystem (10, 10') zum Mischen von zwei oder mehr Substanzen, Folgendes umfassend:
(a) einen Hauptbehälter (100) zum Halten einer oder mehrerer ersten Substanzen (33), wobei der Hauptbehälter (100) eine erste obere Öffnung (110) aufweist;
(b) ein Lagerbehältnis (17) zum Halten einer oder mehrerer zweiten Substanzen (35), wobei das Lagerbehältnis (17) innerhalb des Hauptbehälters (100) positioniert und mit diesem gekoppelt ist und eine Lippe (18) beinhaltet, die eine zweite obere Öffnung (19) definiert, wobei die Lippe (18) einen Außendurchmesser aufweist, der kleiner als der Durchmesser der ersten oberen Öffnung (110) ist;
(c) einen Mischflügel (200, 200'), wobei der Mischflügel (200, 200') einen Außendurchmesser, der kleiner als der Durchmesser der ersten oberen Öffnung (110) ist, und einen Innendurchmesser aufweist, der kleiner als der Außendurchmesser der Lippe (18) ist, wobei der Mischflügel (200, 200') mehrere Öffnungen (210, 210') aufweist; und
(d) eine lösbare Auskleidung (25), die die zweite obere Öffnung (19) abdeckt;
(e) wobei die Lippe (18) einen Verschluss mit einer unteren Oberfläche der lösbaren Auskleidung (25) ausbildet, **dadurch gekennzeichnet, dass** mindestens ein Abschnitt des Mischflügel (200, 200') eine obere Oberfläche der lösbaren Auskleidung (25) berührt.

2. Behältersystem (10, 10') nach Anspruch 1, wobei Folgendes auftritt:
mindestens ein Abschnitt des Mischflügels (200, 200') berührt die Lippe (18), nachdem die lösbare Auskleidung (25) entfernt worden ist;
kein Abschnitt des Mischflügels (200, 200') berührt die Lippe (18), nachdem die lösbare Auskleidung (25) entfernt worden ist; und/oder
die mehreren Öffnungen (210, 210') in dem Mischflügel (200, 200') unterstützen das Mischen der zweiten Substanzen (35) mit den ersten Substanzen (33), wenn die lösbare Auskleidung (25) entfernt wird, um das Lagerbehältnis (17) zu öffnen, und das Behältersystem (10, 10') geschüttelt wird.

3. Behältersystem (10, 10') nach Anspruch 1 oder 2, wobei die erste obere Öffnung (110) in einem Hals (120) des Hauptbehälters (100) ausgebildet ist.

4. Behältersystem (10, 10') nach Anspruch 3, wobei Folgendes auftritt:
das Behältersystem (10, 10') umfasst ferner eine lösbare Kappe (300), die mit einer Außenoberfläche (14) des Halses (120) gekoppelt ist und eine obere innere Oberfläche aufweist, die die erste obere Öffnung (110) abdeckt, wobei der Mischflügel (200, 200') mit der oberen inneren Oberfläche der lösbaren Kappe (300) gekoppelt ist; und/oder das Behältersystem (10, 10') umfasst ferner eine lösbare Kappe (300), die mit einer Außenoberfläche (14) des Halses (120) gekoppelt ist und eine obere innere Oberfläche aufweist, die die erste obere Öffnung (110) abdeckt, wobei der Mischflügel (200, 200') in der oberen inneren Oberfläche der lösbaren Kappe (300) einstückig ausgebildet ist.

5. Behältersystem (10, 10') nach Anspruch 4, wobei Folgendes auftritt:
die lösbare Auskleidung (25) fällt ab, um das Lagerbehältnis (17) zu öffnen, wenn die lösbare Kappe (300) entfernt wird; und/oder
die lösbare Auskleidung (25) ist selektiv lösbar, um das Lagerbehältnis (17) zu öffnen, wenn die lösbare Kappe (300) entfernt wird.

6. Behältersystem (10, 10') nach einem der vorhergehenden Ansprüche, wobei das Lagerbehältnis (17) mit dem Hauptbehälter (100) durch eine oder mehrere Kopplungen (400, 410) gekoppelt ist.

7. Behältersystem (10, 10') nach Anspruch 6, wobei Folgendes auftritt:
die eine oder die mehreren Kopplungen (400, 410) umfassen eine einzelne Komponente (400), die das Lagerbehältnis (17) umschließt, wobei die einzelne Komponente (400) Bohrungen dahindurch aufweist;
die eine oder die mehreren Kopplungen (400, 410) umfassen mehrere Tragarme (410),
die um das Lagerbehältnis (17) beabstandet sind; und/oder
die eine oder die mehreren Kopplungen (400, 410) bilden Öffnungen (407) aus, die das Mischen der zweiten Substanzen (35) mit den ersten Substanzen (33) unterstützen, wenn die lösbare Auskleidung (25) entfernt wird, um das Lagerbehältnis (17) zu öffnen, und das Behältersystem (10, 10') geschüttelt wird.

8. Behältersystem (10, 10') nach einem der vorhergehenden Ansprüche, wobei Folgendes auftritt:
die lösbare Auskleidung (25) ist eine Dichtung, die lose über der zweiten oberen Öffnung (19) platziert ist und in die Lippe (18) eingreift;
die lösbare Auskleidung (25) ist mittels eines Klebstoffs mit der Lippe (18) verschlossen;
und/oder
die lösbare Auskleidung (25) ist sphärisch oder konisch und ist in der zweiten oberen Öffnung (19) angeordnet.

9. Behältersystem (10') nach einem der vorhergehenden Ansprüche, wobei der Mischflügel (200') ferner einen nicht-vertikalen Wandabschnitt (231) umfasst, der an die mehreren Öffnungen (210') angrenzt.

10. Behältersystem (10') nach Anspruch 9, wobei der nicht-vertikale Wandabschnitt (231) mindestens eine verjüngte Seite aufweist, die sich in einem Winkel aus einer entsprechenden Seite eines im Wesentlichen vertikalen Wandabschnitts (230) des Mischflügels (200') erstreckt.

11. Behältersystem (10') nach Anspruch 9 oder 10, wobei der nicht-vertikale Wandabschnitt (231) zwei verjüngte Seiten aufweist, wobei die zwei verjüngten Seiten sich jeweils zueinander in einem Winkel aus zwei entsprechenden Seiten eines im Wesentlichen vertikalen Wandabschnitts (230) des Mischflügels (200') erstrecken.

12. Behältersystem (10') nach Anspruch 11, wobei Folgendes auftritt:
die zwei verjüngten Seiten erstrecken sich zueinander im Wesentlichen in demselben Winkel aus den zwei entsprechenden Seiten des im Wesentlichen vertikalen Wandabschnitts (230) des Mischflügels (200');
die zwei verjüngten Seiten erstrecken sich zueinander in unterschiedlichen Winkeln aus den zwei entsprechenden Seiten des im Wesentlichen vertikalen Wandabschnitts (230) des Mischflügels (200'); und/oder
die zwei verjüngten Seiten enden im Wesentlichen in einem Punkt, der an die mehreren Öffnungen (210') angrenzt.

13. Verfahren zum getrennten Lagern und Mischen von zwei oder mehr Substanzen in einem Behältersystem (10, 10'), wobei das Verfahren Folgendes umfasst:
(a) Halten einer oder mehrerer ersten Substanzen (33) in einem Hauptbehälter (100);
(b) Halten einer oder mehrerer zweiten Substanzen (35) in einem Lagerbehältnis (17), das innerhalb des Hauptbehälters (100) gekoppelt ist;
(c) Schließen des Lagerbehältnisses (17) mit einer Auskleidung (25), um zu verhindern, dass die zweiten Substanzen (35) sich mit den ersten Substanzen (33) mischen;
(d) Eingreifen der Auskleidung (35) in einen Mischflügel (200, 200'); und
(e) wenn das Mischen der ersten Substanzen (33) mit den zweiten Substanzen (35) gewünscht ist;
Losmachen des Mischflügels (200, 200') von der Auskleidung (25);
Lösen der Auskleidung (25), um das Lagerbehältnis (17) zu öffnen;
Schließen des Hauptbehälters (100) mit einer Kappe (300); und Schütteln des Behältersystems (10, 10'), um das Mischen der ersten Substanzen (33) mit den zweiten Substanzen (35) zu verursachen, wobei der Mischflügel (200, 200') den Mischschritt unterstützt,
**dadurch gekennzeichnet, dass**
die Kappe (300) mit dem Mischflügel (200, 200') gekoppelt ist.

14. Verfahren nach Anspruch 13, wobei die eine oder die mehreren ersten Substanzen aus der Gruppe ausgewählt sind, die Folgendes umfasst: Wasser, dehydrierte Substanzen, konservierungsmittelfreie Substanzen, Nahrungsergänzungsmischungen, Ernährungsmischungen, Proteinmischungen, milchbasierte Proteine, Milchproteine, Molkenproteine, pflanzenbasierte Proteine, sojabasierte Proteine, Aminosäuren, Beta-Alanin, Vitamine, Mineralien, Kreatin, Glutamin, L-Arginin, Phenylalanin, L-Leucin, L-Isoleucin, L-Yalin, Synephrin, Yohimbe, Ginseng, Ascorbinsäure, Hydroxyl-Zitronensäure, Aloe Vera, Dimethylamyamin, Polysaccharid, Monosaccharid, Maltodextrin, Dextrose, Fructose, Silizium, künstliche Süßstoffe, natürliche Süßstoffe, Sukralose, künstliche oder natürliche Aromen, künstliche oder natürliche Farbstoffe, Tee, Kaffee, Milchprodukte oder eine beliebige Kombination davon.

15. Verfahren nach Anspruch 13, wobei die eine oder die mehreren zweiten Substanzen aus der Gruppe ausgewählt sind, die Folgendes umfasst: Wasser, dehydrierte Substanzen, konservierungsmittelfreie Substanzen, Nahrungsergänzungsmischungen, Ernährungsmischungen, Proteinmischungen, milchbasierte Proteine, Milchproteine, Molkenproteine, pflanzenbasierte Proteine, sojabasierte Proteine, Aminosäuren, Beta-Alanin, Vitamine, Mineralien, Kreatin, Glutamin, L-Arginin, Phenylalanin, L-Leucin, L-Isoleucin, L-Yalin, Synephrin, Yohimbe, Ginseng, Ascorbinsäure, Hydroxyl-Zitronensäure, Aloe Vera, Dimethylamyamin, Polysaccharid, Monosaccharid, Maltodextrin, Dextrose, Fructose, Silizium, künstliche Süßstoffe, natürliche Süßstoffe, Sukralose, künstliche oder natürliche Aromen, künstliche oder natürliche Farbstoffe, Tee, Kaffee, Milchprodukte oder eine beliebige Kombination davon.

## Revendications

1. Système de récipient (10, 10') destiné au mélange de deux ou de plusieurs substances comprenant :
(a) un récipient principal (100) destiné à contenir une ou plusieurs premières substances (33), ledit récipient principal (100) présentant une première ouverture supérieure (110) ;
(b) un réceptacle de stockage (17) destiné à contenir une ou plusieurs secondes substances (35), ledit réceptacle de stockage (17) étant positionné à l'intérieur dudit récipient principal (100) et accouplé à celui-ci, et comportant une lèvre (18) définissant une seconde ouverture supérieure (19), ladite lèvre (18) présentant un diamètre extérieur inférieur au diamètre de la première ouverture supérieure (110) ;
(c) une lame de mélange (200, 200'), ladite lame de mélange (200, 200') présentant un diamètre extérieur inférieur au diamètre de la première ouverture supérieure (110) et un diamètre intérieur inférieur au diamètre extérieur de ladite lèvre (18), ladite lame de mélange (200, 200') présentant une pluralité d'ouvertures (210, 210') ; et
(d) un revêtement amovible (25) recouvrant ladite seconde ouverture supérieure (19) ;
(e) dans lequel ladite lèvre (18) forme un joint d'étanchéité avec une surface inférieure dudit revêtement amovible (25), **caractérisé en ce qu'**au moins une partie de ladite lame de mélange (200, 200') est en contact avec une surface supérieure dudit revêtement amovible (25).

2. Système de récipient (10, 10') selon la revendication 1, dans lequel au moins l'un de ce qui suit se produit :
au moins une partie de ladite lame de mélange (200, 200') entre en contact avec ladite lèvre (18) après le retrait dudit revêtement amovible (25) ;
aucune partie de ladite lame de mélange (200, 200') n'entre en contact avec ladite lèvre (18) après le retrait dudit revêtement amovible (25) ; et
ladite pluralité d'ouvertures (210, 210') dans ladite lame de mélange (200, 200') facilite le mélange desdites secondes substances (35) avec lesdites premières substances (33) lorsque ledit revêtement amovible (25) est retiré pour ouvrir ledit réceptacle de stockage (17) et que ledit système de récipient (10, 10') est agité.

3. Système de récipient (10, 10') selon la revendication 1 ou 2, dans lequel ladite première ouverture supérieure (110) est formée dans un col (120) dudit récipient principal (100).

4. Système de récipient (10, 10') selon la revendication 3, dans lequel au moins l'un de ce qui suit se produit :
le système de récipient (10, 10') comprend en outre un capuchon amovible (300) accouplé à une surface extérieure (14) dudit col (120) et présentant une surface intérieure supérieure recouvrant ladite première ouverture supérieure (110), dans lequel ladite lame de mélange (200, 200') est accouplée à ladite surface intérieure supérieure dudit capuchon amovible (300) ; et le système de récipient (10, 10') comprend en outre un capuchon amovible (300) accouplé à une surface extérieure (14) dudit col (120) et présentant une surface supérieure intérieure recouvrant ladite première ouverture supérieure (110), dans lequel ladite lame de mélange (200, 200') est intégralement formée dans ladite surface supérieure intérieure dudit capuchon amovible (300).

5. Système de récipient (10, 10') selon la revendication 4, dans lequel au moins l'un de ce qui suit se produit :
ledit revêtement amovible (25) tombe pour ouvrir ledit réceptacle de stockage (17) lorsque ledit capuchon amovible (300) est retiré ; et
ledit revêtement amovible (25) est sélectivement amovible pour ouvrir ledit réceptacle de stockage (17) lorsque ledit capuchon amovible (300) est retiré.

6. Système de récipient (10, 10') selon l'une des revendications précédentes, dans lequel ledit réceptacle de stockage (17) est accouplé audit récipient principal (100) par un ou plusieurs assemblages (400, 410).

7. Système de récipient (10, 10') selon la revendication 6, dans lequel au moins l'un de ce qui suit se produit :
lesdits un ou plusieurs assemblages (400, 410) comprennent un composant unique (400) entourant ledit réceptacle de stockage (17), ledit composant unique (400) étant traversé par des orifices ;
lesdits un ou plusieurs assemblages (400, 410) comprennent une pluralité de bras de support (410) espacés
autour dudit réceptacle de stockage (17) ; et lesdits un ou plusieurs assemblages (400, 410) forment des ouvertures (407) qui facilitent le mélange desdites secondes substances (35) avec lesdites premières substances (33) lorsque ledit revêtement amovible (25) est retiré pour ouvrir ledit réceptacle de stockage (17) et que ledit système de récipient (10, 10') est agité.

8. Système de récipient (10, 10') selon l'une des revendications précédentes, dans lequel au moins l'un de ce qui suit se produit :
ledit revêtement amovible (25) est un joint placé librement sur la seconde ouverture supérieure (19) et venant en prise avec ladite lèvre (18) ;
ledit revêtement amovible (25) est scellé à ladite lèvre (18) à l'aide d'un adhésif ; et
ledit revêtement amovible (25) est sphérique ou conique et est disposé dans ladite seconde ouverture supérieure (19).

9. Système de récipient (10') selon l'une des revendications précédentes, dans lequel ladite lame de mélange (200') comprend en outre une partie de paroi non verticale (231) adjacente à ladite pluralité d'ouvertures (210').

10. Système de récipient (10') selon la revendication 9, dans lequel ladite partie de paroi non verticale (231) présente au moins un côté conique s'étendant selon un angle depuis un côté correspondant d'une partie de paroi sensiblement verticale (230) de la lame de mélange (200').

11. Système de récipient (10') selon la revendication 9 ou 10, dans lequel ladite partie de paroi non verticale (231) présente deux côtés coniques, chacun des deux côtés coniques s'étendant l'un vers l'autre selon un angle depuis deux côtés correspondants d'une partie de paroi sensiblement verticale (230) de la lame de mélange (200').

12. Système de récipient (10') selon la revendication 11, dans lequel au moins l'un de ce qui suit se produit :
lesdits deux côtés coniques s'étendent l'un vers l'autre selon un angle sensiblement identique depuis lesdits deux côtés correspondants de la partie de paroi sensiblement verticale (230) de la lame de mélange (200') ;
lesdits deux côtés coniques s'étendent l'un vers l'autre à des angles différents depuis lesdits deux côtés correspondants de la partie de paroi sensiblement verticale (230) de la lame de mélange (200') ; et
lesdits deux côtés coniques se terminent sensiblement en un point adjacent à ladite pluralité d'ouvertures (210').

13. Procédé destiné à stocker séparément et à mélanger deux ou plusieurs substances dans un système de récipient (10, 10'), le procédé comprenant :
(a) la rétention d'une ou de plusieurs premières substances (33) dans un récipient principal (100) ;
(b) la rétention d'une ou de plusieurs secondes substances (35) dans un réceptacle de stockage (17) accouplé à l'intérieur dudit récipient principal (100) ;
(c) la fermeture dudit réceptacle de stockage (17) à l'aide d'un revêtement (25) pour empêcher lesdites secondes substances (35) de se mélanger avec lesdites premières substances (33) ;
(d) la mise en prise dudit revêtement (35) avec une lame de mélange (200, 200') ; et
(e) lorsque le mélange desdites premières substances (33) avec lesdites secondes substances (35) est
souhaité ;
la mise hors de prise de ladite lame de mélange (200, 200') dudit revêtement (25) ;
la libération dudit revêtement (25) pour ouvrir ledit réceptacle de stockage (17) ;
la fermeture dudit récipient principal (100) à l'aide d'un capuchon (300) ; et
l'agitation dudit système de récipient (10, 10') pour amener le mélange desdites premières substances (33) avec lesdites secondes substances (35), dans lequel ladite lame de mélange (200, 200') facilite ladite étape de mélange
**caractérisé en ce que** le capuchon (300) est accouplé à ladite lame de mélange (200, 200').

14. Procédé de la revendication 13, dans lequel lesdites une ou plusieurs premières substances sont choisies dans le groupe comprenant : de l'eau, les substances déshydratées, les substances sans conservateurs, les mélanges de compléments alimentaires, les mélanges nutritionnels, les mélanges de protéines, les protéines à base de produits laitiers, les protéines de lait, les protéines de lactosérum, les protéines à base de végétaux, les protéines à base de soja, les acides aminés, la bêta-alanine, les vitamines, les minéraux, la créatine, la glutamine, la L-arginine, la phénylalanine, la L-Leucine, la L-Isoleucine, la L-yaline, la synéphrine, le yohimbé, le ginseng, l'acide ascorbique, l'acide citrique hydroxylé, l'aloe vera, la diméthylamyamine, le polysaccharide, le monosaccharide, la maltodextrine, le dextrose, le fructose, le silicium, les édulcorants artificiels, les édulcorants naturels, le sucralose, les arômes artificiels ou naturels, les couleurs artificielles ou naturelles, le thé, le café, les produits laitiers, ou toute combinaison de ceux-ci.

15. Procédé de la revendication 13, dans lequel lesdites une ou plusieurs secondes substances sont choisies dans le groupe comprenant : de l'eau, les substances déshydratées, les substances sans conservateurs, les mélanges de compléments alimentaires, les mélanges nutritionnels, les mélanges de protéines, les protéines à base de produits laitiers, les protéines de lait, les protéines de lactosérum, les protéines à base de végétaux, les protéines à base de soja, les acides aminés, la bêta-alanine, les vitamines, les minéraux, la créatine, la glutamine, la L-arginine, la phénylalanine, la L-Leucine, la L-Isoleucine, la L-yaline, la synéphrine, le yohimbé, le ginseng, l'acide ascorbique, l'acide citrique hydroxylé, l'aloe vera, la diméthylamyamine, le polysaccharide, le monosaccharide, la maltodextrine, le dextrose, le fructose, le silicium, les édulcorants artificiels, les édulcorants naturels, le sucralose, les arômes artificiels ou naturels, les couleurs artificielles ou naturelles, le thé, le café, les produits laitiers, ou toute combinaison de ceux-ci.
